# EUROPEAN PATENT APPLICATION

(11) **EP 4 550 182 A1**
(43) Date of publication of application: **07.05.2025**
(21) Application number: 24209884.6
(22) Date of filing: 30.10.2024
(51) Int. Cl.: G06F 21/31, H04L 9/40, G06F 21/62

(54) **SYSTEMS AND METHODS TO DISTRIBUTE, SYNCHRONIZE AND RESET EMERGENCY BREAK GLASS USER CREDENTIALS FOR REMOTE DEVICES**

(30) Priority: 03.11.2023 US 202363596073 P; 08.07.2024 US 202418765960
(71) Applicant: Schneider Electric (Australia) Pty Limited, New South Wales 2113 (AU)
(72) Inventor: Enriquez, Luke, Melbourne (AU)
(74) Representative: Manitz Finsterwald Patent- und Rechtsanwaltspartnerschaft mbB

(57) **Abstract**

A method to access a disconnected remote device is provided. The method includes, prior to being disconnected from a network, the remote device accessing a break glass synchronization (sync) account stored by a directory server, reading break glass user credentials stored in association with the break glass sync account, the break glass user credentials including a secure password mechanism, and storing the break glass user credentials defined for the remote device on the remote device. The method further includes, after being disconnected from the network, the remote device receiving login credentials by a user attempting to log in to the remote device, including a user-entered secure password mechanism, comparing the login credentials to the break glass user credentials, and allowing access to the protected information stored by or functionality provided by the remote device based on a result of the comparison.

## Description

### CROSS-REFERENCE TO RELATED APPLICATIONS

This application claims priority to and the benefit of U.S. Provisional Application No. 63/596,073, filed November 3, 2023, contents of which are herein incorporated by reference in their entirety.

### FIELD

This disclosure relates generally to remote devices, and more particularly, to systems and methods to distribute, synchronize and reset emergency break glass user credentials for remote devices.

### BACKGROUND

In a typical industrial automation system, a Supervisory Control and Data Acquisition (Scada) system communicates with many industrial assets, including smart devices such as remote terminal units (RTUs) and programmable logic controllers (PLCs). These devices provide remote industrial or resource monitoring and control and are configured for use in a particular application (e.g., oil and gas, water and wastewater, renewable energy). The Scada system typically communicates with the remote devices via a host network, such as a private data radio network, cellular telephone network, satellite links or other wide area communication networks.

When a remote device is unintentionally disconnected from its host network, a field technician is typically dispatched to investigate the root cause of the problem. In normal network connected operation, to ensure only trusted users are able to access the remote device's internal diagnostics and event history, the remote device is configured to check the unique credentials of a user login with a central trusted directory service hosted on the host network, such as Microsoft^{®} Active Directory^{™} and other Directory Service software packages.

When the remote device is unable to connect to the host network, it is unable to connect with the directory service, resulting in a denied login. This prevents access to the device to review diagnostics and event history, which is undesirable for reasons apparent.

### SUMMARY

The purpose and advantages of the illustrated embodiments will be realized and attained by the devices, systems and methods particularly pointed out in the written description and claims hereof, as well as from the appended drawings. To achieve these and other advantages and in accordance with the purpose of the illustrated embodiments, in one aspect, disclosed is a method to access a disconnected remote device. The method includes, prior to being disconnected from a network, the remote device accessing a break glass synchronization (sync) account stored by a directory server, reading break glass user credentials stored in association with the break glass sync account, the break glass user credentials including a secure password mechanism, and storing the break glass user credentials defined for the remote device on the remote device. The method further includes, after being disconnected from the network, the remote device receiving login credentials by a user attempting to log in to the remote device, including a user-entered secure password mechanism, comparing the login credentials to the break glass user credentials, and allowing access to the protected information stored by or functionality provided by the remote device based on a result of the comparison.

In one or more embodiments, the method can further include, subsequent to the remote device reconnecting to the network, repeatedly updating the break glass user credentials stored on the remote device, wherein the break glass user credentials can be changed responsive to a determination that the remote device had been logged into using the break glass user credentials beyond a limit established by the break glass user credentials.

In one or more embodiments, updating the break glass user credentials stored on the remote device can include the remote device logging into the directory services as a break glass synchronization user, accessing the break glass user credentials stored in association with the break glass sync account, and replacing previously stored break glass user credentials with the accessed break glass user credentials.

In one or more embodiments, determination that the remote device had been logged onto using the break glass user credentials beyond a limit established by the break glass user credentials can be determined locally at the remote device or by a remote monitoring or supervisory system.

In one or more embodiments, the remote device can be included in a plurality of remote devices, and the method can further include individual remote devices of the plurality of remote devices, when connected to the network, repeatedly logging into the directory services as the break glass synchronization user, accessing the break glass user credentials stored in association with the break glass sync account, and replacing previously stored break glass user credentials with the accessed break glass user credentials.

In one or more embodiments, the repeated logging into the directory services can be periodic, and the break glass user credentials stored in association with the break glass sync account can be changed responsive to a determination that the individual remote device has been logged into using the break glass user credentials beyond a limit established by the break glass user credentials.

In one or more embodiments, the secure password mechanism can be or can include a salted hash password.

In one or more embodiments, the break glass user credentials can include pre-defined items including at least one of level of access and permissible BGU login count, wherein the level of access can define which protected information stored by the remote device or selected functionality of the remote device can be accessible to the BGU once the BGU is logged into the remote device and the permissible BGU login count can define when logins into the remote device are permitted on the basis of count and/or time frame.

In accordance with further aspects of the disclosure, a remote device or a plurality of remote devices is provided. The remote device and/or the plurality of remote devices are configured to perform the disclosed method.

In accordance with still more aspects of the disclosure, a non-transitory computer readable storage medium and one or more computer programs embedded therein are provided. The computer programs include instructions, which when executed by a computer system, cause the computer system to perform the disclosed method.

### BRIEF DESCRIPTION OF THE DRAWINGS

The foregoing features of the disclosure, as well as the disclosure itself may be more fully understood from the following detailed description of the drawings, in which:
FIG. 1 shows an example distributed industrial system, in accordance with embodiments of this disclosure;
FIG. 2 shows example contents of a directory server of a distributed industrial system, in accordance with embodiments of this disclosure;
FIG. 3 shows an example method for performing break glass user synchronization on a remote device, in accordance with embodiments of the disclosure;
FIG. 4 shows an example method for performing break glass user authentication on a remote device to authenticate a technician for allowing the technician to access protected information stored on the remote device, in accordance with embodiments of the disclosure;
FIG. 5 shows an example method performed by one or more remote devices to authenticate a technician for allowing the technician to access protected information stored on the remote device and for break glass user synchronization of on the one or more remote devices, in accordance with embodiments of the disclosure; and
FIG. 6 shows a block diagram of an exemplary computer system that could be used to implement BGU module shown in FIG. 1, in accordance with embodiments of the disclosure.

### DETAILED DESCRIPTION

The features and other details of the concepts, systems, and techniques sought to be protected herein will now be more particularly described. It will be understood that any specific embodiments described herein are shown by way of illustration and not as limitations of the disclosure and the concepts described herein. Features of the subject matter described herein can be employed in various embodiments without departing from the scope of the concepts sought to be protected.

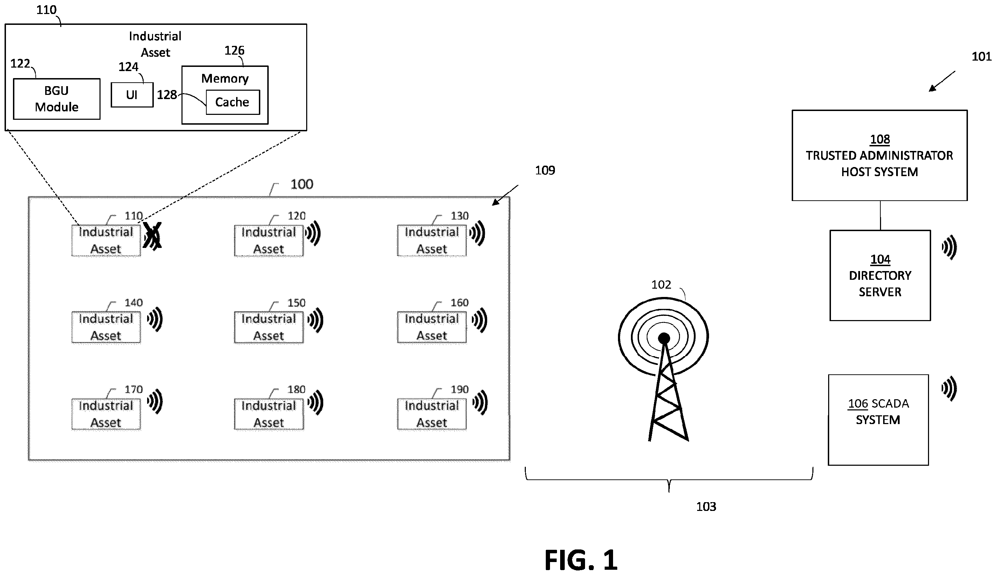

Referring to FIG. 1, an example industrial operation 100 in accordance with embodiments of the disclosure includes a plurality of industrial assets 110, 120, 130, 140, 150, 160, 170, 180, 190, also referred to generally as industrial assets (or devices) 109. The industrial assets 109 may be associated with a particular application (e.g., an industrial application), applications, and/or process(es). The industrial assets 109 may include electrical or electronic assets, for example, such as machinery associated with the industrial operation 100 (e.g., a manufacturing or natural resource extraction operation). The industrial assets 110, 120, 130, 140, 150, 160, 170, 180, 190 may also include the controls and/or ancillary assets associated with the industrial operation 100, for example, process control and monitoring measurement devices, such as a remote terminal unit (RTU), a programmable logic controller (PLC), and/or a peripheral, such as a multivariable transmitter (MVT). In embodiments, the industrial assets 110, 120, 130, 140, 150, 160, 170, 180, 190 may be installed or located in one or more facilities (i.e., buildings) or other physical locations (i.e., sites) associated with the industrial operation 100. The facilities may correspond, for example, to industrial buildings or plants. Additionally, the physical locations may correspond, for example, to geographical areas or locations, which may be remote locations (i.e., not easily accessible locations) in some instances, with the industrial assets 110, 120, 130, 140, 150, 160, 170, 180, 190 dispersed over a wide area. In the example provided, at least one of industrial assets 109 is a remote device having a remote physical location.

The industrial assets 109 may each be configured to perform one or more tasks in some embodiments. For example, at least one of the industrial assets 109 may be configured to produce or process one or more products, or a portion of a product, associated with the industrial operation 100. Additionally, at least one of the industrial assets 109 may be configured to sense or monitor one or more parameters (e.g., industrial parameters) associated with the industrial operation 100. For example, industrial asset 110 may include or be coupled to a temperature sensor configured to sense temperature(s) associated with the industrial assets 110, for example, ambient temperature proximate to the industrial assets 110, temperature of a process associated with the industrial asset 110, temperature of a product produced by the industrial asset 110, etc. The industrial asset 110 may additionally or alternatively include one or more pressure sensors, flow sensors, level sensors, vibration sensors and/or any number of other sensors, for example, associated the application(s) or process(es) associated with the industrial asset 110. The application(s) or process(es) may involve water, air, gas, electricity, steam, oil, etc., in one example embodiment.

FIG. 1 further shows that industrial operation 100 is included in a distributed industrial system 101. Distributed industrial system 101 further includes a directory server 104, a Scada system 106, and a trusted DS administrator host system 108. Scada system 106 is in communication with one or more of the industrial assets 110, 120, 130, 140, 150, 160, 170, 180, 190, one or more being remote devices/assets, as noted above. The Scada system 106 may be coupled to industrial operation 100 via a communications network 103, such as a private data radio network and/or a cellular telephone network. The private data radio network may include, for example, a plurality of remote radios associated with one or more remote base stations 102 and a Scada system 106. Suitable data radios for use as remote radio and/or access point are Trio^{™} Q licensed Ethernet and serial data radios available from Schneider Electric^{®}. These licensed UHF data radios provide serial and Ethernet connectivity for long range wireless data communications in a wide range of Scada and telemetry applications.

The remote base station(s) 102 can establish communication between at least one RTU of industrial assets 109 and data acquisition and Scada system 106. The RTU transmits telemetry data to the Scada system 106 and receives messages back, e.g., via remote base station 102, for controlling connected physical objects of industrial operation 100. In addition to the RTU, the Scada system 106 can communicate with at least one PLC of industrial assets 109. In a Scada-based control system, the PLC is connected to, for example, a sensor for collecting the sensor output signals and converting the signals into digital data. The Scada system 106 may also communicate with one or more industrial assets that include multi-variable transmitters (MVTs) 109, which is used to measure flow, differential pressure, temperature, pressure, or the like. The various industrial assets 109, including the RTU, the PLC, the MVT, and/or the sensor, may communicate with the Scada system 106 according to different protocols (e.g., DNP3, Modbus, IEC-104).

As noted in the Background section of this disclosure, when a remote device, such as the above-discussed industrial assets 109, is unintentionally disconnected from its host network, a field technician is typically dispatched to investigate the root cause of the problem. As shown in FIG. 1, this can occur when a remote device, such as one of industrial assets 109, cannot receive and/or transmit a communication signal (as shown by an "X" ) for a variety of possible reasons. As an example, industrial asset 110 (also referred to as remove device 110) is shown as being disconnected.

Using remote device 110 as an example industrial asset 109, reference to remote device 110 can refer as well to any of industrial assets 109. Remote device 110 is further communicatively coupled to directory server 104 via network 103. Communication between remote device 110 and directory server 104 can use the same or different remote base station(s) 102 as used for communication with Scada system 106. Trusted DS administrator host system 108 is coupled to the directory server 104 via a wired and/or wireless communication link that can be fully or partially included in network 103 or can be separate from network 103.

In normal network connected operation, to ensure only authorized users (e.g., technicians) are able to access the remote device 110's protected information or functionality (e.g., internal diagnostics and/or event history) or particular functions the remote device 110 can perform (e.g., to change configuration of remote device 110 or of another one of industrial assets 109), the remote device 110 is configured to check unique asset login credentials of a local asset user login with a central trusted directory service (such as Microsoft^{®} Active Directory^{™}) hosted by directory server 104. When the remote device 110 is unable to connect to network 103 and/or directory server 104, a denied login results. This prevents access by the local asset user to the remote device 110 to review diagnostics and event history.

Traditionally, there are only limited solutions to provide an alternative set of asset login credentials if the remote device 110 is not able to access directory server 104. One traditional method is to define a local asset user to act as a trusted asset administrator. Once divulged, the trusted asset administrator is required to reset the asset login credentials (e.g., password) of the local asset user on each remote device (e.g., each of industrial assets 109). This can be a difficult and time-consuming exercise. The process can require the trusted asset administrator to physically access each remote device (of industrial assets 109) to perform a manual process that can include actions, for example pushing information to each of industrial assets 109, logging into each of industrial assets 109, accessing the configuration information of industrial assets 109, setting a password in each accessed configuration information, and rebooting each of industrial assets 109. However, the industrial assets 109 can be physically difficult to access. For example, travelling to the different industrial assets 109 can require multiple helicopter trips or the like.

Although a method of caching of a local asset user's unique directory server credentials can also be applied for accessing the remote device 110's internal diagnostics and/or event history, this assumes the local asset user logging into the remote device 110 has previously logged into the remote device 110, which is an unlikely scenario in large systems that are geographically dispersed across different regions and geographies and maintained and/or monitored by multiple different contracting companies.

The disclosure addresses at least the above-noted concerns. More particularly, the disclosure provides systems and methods for industrial assets 109 (as opposed to humans) to function as device break glass sync users (BGSUs) and access, using BGSU login credentials, a break glass sync account defined and hosted by directory server 104. In addition, the disclosure provides systems and methods to distribute, synchronize, and reset the BGSU login credentials to a group of one or more devices 109 that are configured to login to the break glass sync account as BGSUs.

Further, the disclosure provides systems and methods that allow a local asset user to gain access as a break glass user (BGU) to one or more of the devices 109 that are BGSUs, that are not accessible under normal controls, such as under emergency conditions when the one or more devices 109 cannot access directory server 104. In the current example, all of the devices 109 are BGSUs that are configured to log into the same break glass sync account. Once a device 109 is logged into the break glass sync account as a BGSU, it can access an attributes field stored in the break glass sync account.

It is noted that one or more trusted direct services (DS) administrator(s) may institute a high level of monitoring and auditing of the break glass sync account, due to the ability to use the break glass sync account to bypass security measures.

The attributes field of the break glass sync account is a text field that stores BGU credentials. Each device 109 that logs into the break glass sync account as a BGSU synchronizes itself with the break glass sync account by storing BGU credentials that are stored in the attributes field. In this way, the device 109 can use the BGU credentials to verify a local asset user attempting to gain break glass access to the device 109 as a BGU.

The break glass sync account defined in the directory server 104 can be set up and managed by a trusted DS administrator that has appropriate credentials. For example, the trusted DS administrator can log into trusted DS administrator host system 108 to access directory server 104 for creating and/or updating the break glass sync account.

Each break glass sync account hosted by directory server 104 can store BGU credentials for multiple BGUs (e.g., technicians). The different BGUs can each have authorization for a different level of access. The level of access can define, for example, which protected information stored by the device 109 or selected functionality of the device 109 will be accessible to the BGU once the BGU is logged into the device 109. The BGU credentials for the respective BGUs can each be associated with a different level of access to protected information or functionality of the devices 109 that are as BGSUs of the break glass sync account.

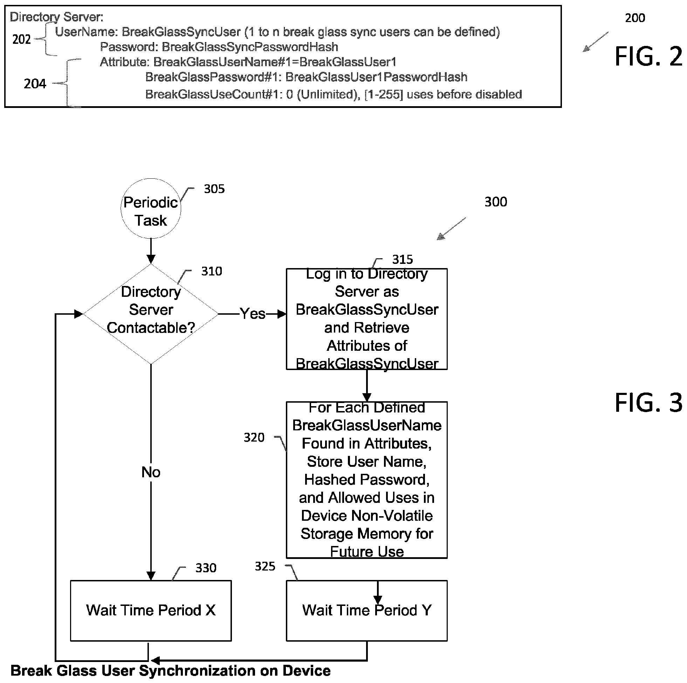

With reference to FIG. 2, an example BGSU is defined in a BGSU entry 200 stored (or accessed) by directory server 104 for one or more BGSUs. The BGSUs in this example are devices 109 (shown in FIG. 1). The BGSU entry 200 can be established in directory server 104 by a trusted DS administrator using trusted DS administrator host system 108. The BGSU entry 200 includes BGSU login credentials for verifying BGSU logins, including a username and password 202. While the example in FIG. 2 shows one BGSU entry 200, directory server 104 can have multiple BGSU entries 200, each with differing BGSU login credentials for a different set of BGSUs.

Each BGSU entry 200 further includes an attributes section 204, which in this example can accept data in a free text format. Attributes section 204 stores BGU credentials for one or more a BGUs. The BGUs can have one or more levels, each level providing different rights. The BGU credentials for each level include several fields.

In an example, without limitation to the specific example, the fields for each level can be separated by a first delimiter (e.g., a comma). BGU credentials for different levels and/or different BGUs can be separated by a second delimiter that is different from the first delimiter (e.g., a semicolon). The fields for each BGU include, for example, a unique BGU username, and the fields for each level include, a secure password mechanism, and a permissible BGU login count, and an access level. The fields for each of the one or more levels are modifiable fields. In one or more embodiments, the BGU username remains unchanged. Depending on the design, a different BGU username and BGU secure password mechanism can be used for each level, or alternatively, one BGU username can be used for all levels, whereas the BGU secure password mechanism is different for each level.

More specifically, the secure password mechanism can be, for example, a salted hashed password. An example password format is: $id$salt$hash, where id can be an encryption identifier, e.g., 1=MD5, 5=SHA128, 6=SHA512, that defines the type of encryption algorithm associated with the salted hash. The permissible BGU login counts can specify when logins into the device 109 are permitted, e.g., on the basis of count and/or time frame. For example, BGU logins can be permitted for a predefined number of allowed logins (e.g., a number of BGU logins permitted per BGU or for all BGUs, a number of BGU logins permitted per a predefined time interval, a predefined time interval during which BGU logins are permitted, etc. Regarding the access level, some example access levels are: 0: Unrestricted, 1: Security, 2: Read/Write, 3: Read only.

The BGU credentials are stored by the BGSUs in nonvolatile memory upon logging into the BGSU account. Each BGSU (e.g., device 109) uses its stored BGU credentials to verify BGU logins, such as by a technician that cannot log into the device 109 a normal way using directory server 104 verification (e.g., due to a break in communication between device 109 and directory server 104). Also, once the BGU username and BGU secure password mechanism is verified, the device 109 determines the associated access level for the login session. The device 109 can allow access according to the access level determined for the login session.

The device 109 can further determine the permissible BGU login count. The device 109 can track the number of BGU logins (e.g., per BGU or total for all BGUs) and permit the login session to proceed if the permissible BGU login count for the login session is not exceeded by the number of tracked logins. Additionally or alternatively, the number of BGU logins can be communicated to and/or tracked by an external system, such as Scada system 106).

Once the associated permissible BGU login count is exceeded by any of the BGSUs of the BGSU account (as determined by the device 109 or by a device external to the device 109 (e.g., Scada system 106 shown in FIG. 1), the modifiable fields of the BGU credentials can be reset on directory server 104 for the BGSU account. All of the BGSUs (e.g., devices 109) for the BGSU account can then synchronize with the BGSU account and each other by logging into the BGSI account per their normal protocols and storing these new BGU credentials in non-volatile memory. This ensures that if the field technician that acted as a BGU is no longer trusted, there is no breach in security.

With returned reference to FIG. 1, an enlarged view of an example BGU, industrial asset 110, is provided. Each BGU (e.g., devices 109) can be configured similarly. Industrial assets 110 includes a break glass user (BGU) module 122, user interface (Ul) 124, and memory 126 (volatile and non-volatile), wherein memory 126 includes cache 128. All or portions of BGU module, UI 124, and/or memory 126 can be integrated with industrial asset 110 or can be remote from industrial asset 110, for example, in at least one of: a cloud-based system, on-site/edge software, a gateway, or another head-end system that can communicate with the remote device but is not in communication with the directory server 104.

BGU module 122 is configured with the BGU credentials and executes a software sequence to log into the BGSU account hosted by directory server 104. BGU can be configured to routinely log into the BGSU account. Once logged into the BGSU account, BGU module 122 executes a software sequence for accessing the text stored in the attributes section and securely storing the BGU credentials in its non-volatile memory of memory 126. The information in various fields of the BGU credentials can be parsed as needed. Thus, each time the synchronized group of industrial assets 109 logs into the BGU account they are synchronized with the directory server 104 and with each other.

In the event of industrial asset 110 being disconnected from the network and subsequently directory server 104, one BGU password can be shared by a trusted BGU administrator with the field technician for emergency use in response to a BGU request. The trusted BGU administrator is a human that handles BGU requests from a human (e.g., field technician) that needs BGU access to devices 109. The trusted BGU administrator receives the BGU requests via an external network, has access to updated BGU credentials (e.g., stored in a BGU database), and transmits responses to BGU requests via the external network.

A response to a BGU request includes a BGU login name and password. The BGU response is provided by the trusted BGU administrator to the field technician. The external network does not use the network used by directory server 104, and rather uses, for example, a cellular network, secured internet, messaging service, and/or satellite communication. Additionally, the BGU password is provided using the secure password mechanism. In this example, the trusted BGU administrator shares the BGU login name and password with the field technician as a free text string via the external network.

In one example implementation, the BGU module 122 detects when a BGU (e.g., field technician) has logged into industrial asset 110 and/or has exceeded the permissible login count, and in response creates one or more alarms and/or increments an event counter. Upon industrial asset 110 reconnecting to network 103, the one or more alarms and/or event counter are detected and/or transmitted (e.g., by or to Scada system 106 (or any monitor or supervising system), trusted DS administrator host system 108, or an internal or external system (not shown). The one or more alarms and/or event counter can be communicated to a trusted BGU administrator, such as in the form of a visual, audible, tactile, etc. alert. The one or more alarms and/or event counter can prompt the trusted BGU administrator to change the BGU passwords included in the attributes section and to update the BGU database.

This means that if BGU credentials are divulged for use (e.g., for accessing industrial asset 110), there is no need to change the BGSU credentials. Furthermore, there is no need to change configuration of industrial asset 110. Rather, the only precaution performed can be to edit the attribute section of the BGSU account hosted on the directory service (and BGU database). The edit can be limited to changing the secure password mechanism that was divulged for the break glass user.

As the other BGSUs associated with the BSGU account login to synchronize, the updated salted hashed password will be synchronized across all BSGUs (in this example, industrial assets 109). For example, the BSGUs may login periodically, e.g., every 24 hours. Thus, all of the BSGUs associated with the BSGU account will be synchronized within about 24 hours.

Other example aspects and advantages of the disclosure will be further appreciated from the discussions of the figures below.

Referring to FIGS. 3-5, several flowcharts (or flow diagrams) are shown to illustrate various methods (here, methods 300, 400, 500) of the disclosure relating to distributing, synchronizing, and resetting emergency break glass user credentials for remote devices. Rectangular elements (typified by element 315 in FIG. 3), as may be referred to herein as "processing blocks," represent computer software instructions or groups of instructions. Diamond shaped elements (typified by element 310 in FIG. 3), as may be referred to herein as "decision blocks," represent computer software instructions, or groups of instructions, which affect the execution of the computer software instructions represented by the processing blocks. The processing blocks and decision blocks (and other blocks shown) can represent steps performed by functionally equivalent circuits such as a digital signal processor circuit or an application specific integrated circuit (ASIC).

The flowcharts do not depict the syntax of any particular programming language. Rather, the flowcharts illustrate the functional information one of ordinary skill in the art requires to fabricate circuits or to generate computer software to perform the processing required of the particular apparatus. It should be noted that many routine program elements, such as initialization of loops and variables and the use of temporary variables are not shown. It will be appreciated by those of ordinary skill in the art that unless otherwise indicated herein, the particular sequence of blocks described is illustrative only and can be varied. Thus, unless otherwise stated, the blocks described below are unordered; meaning that, when possible, the blocks can be performed in any convenient or desirable order including that sequential blocks can be performed simultaneously (e.g., run parallel on multiple processors) and vice versa. Additionally, the order/flow of the blocks may be rearranged or interchanged in some cases as well. It will also be understood that various features from the flowcharts described below may be combined in some embodiments. Thus, unless otherwise stated, features from one of the flowcharts described below may be combined with features of other ones of the flowcharts described below, for example, to capture the various advantages and aspects of systems and methods associated with distributing, synchronizing, and resetting emergency break glass user credentials for remote devices sought to be protected by this disclosure. It is also understood that various features from the flowcharts described below may be separated in some embodiments. For example, while the flowcharts illustrated in FIGS. 3 - 5 are shown having many blocks, in some embodiments the illustrated method shown by these flowcharts may include fewer blocks or steps.

Referring to FIG. 3, a flowchart illustrates an example method 300 for performing break glass user synchronization on a remote device that is a BGSU (e.g., remote device 110 shown in FIG. 1). In accordance with some embodiments of this disclosure, the method corresponds to a periodic task, for example, with the periodicity of the task being manually or automatically selected. Method 300 may be implemented, for example, on a BGU module (such as BGU module 122 shown in FIG. 1) of the remote device.

Prior to executing method 300, the remote device is configured to store a set of BGSU credentials. The BGSU credentials are stored securely in nonvolatile memory and do not need to be changed. The stored BGSU credentials include a salted hash of a password. A salted hash is a type of secure, one way encryption. Even if the salted hash is obtained, the password cannot be determined or reverse engineered. When a user enters a password, the password is put into the salted hash algorithm, and the outcome is a salted hash. The user entered password's salted hash outcome is then compared to the salted hash stored in the remote device, to determine if the password was the correct one.

As illustrated in FIG. 3, the method 300 begins at block 305, where the method is initiated. In accordance with some embodiments of this disclosure, the method corresponds to a periodic task, for example, with the periodicity of the task being manually or automatically selected.

Subsequent to the method being initiated at block 305, the method proceeds to block 310 where it is determined whether the directory server (e.g., directory server 104 shown in FIG. 1) is contactable by the remote device. Block 305 can include an attempt by the remote device contact the directory server by sending a contact signal. Remote device can autonomously send the contact signal each time block 310 is executed, e.g., following execution of blocks 305, 325, or 330. Additionally or alternatively, block 310 can be performed responsive to a condition, such as a user prompt, a sensed physical condition, etc.

The directory server is determined to be contactable when a response is received from the directory server responsive to the contact signal. If no response to the contact signal is received within a predetermined time period, the directory server is determined to not be contactable.

If it is determined the directory server is contactable, the method proceeds to block 315 where there is a login (e.g., by the remote device) to the BGSU account hosted by directory services. The device logs into the BGSU account using its BGSU username and password. Once logged in, the remote device retrieves the attributes associated with the BGSU account. The BGSU module is configured to autonomously log in whenever block 315 is executed and/or in response to a condition, such as a user prompt, passage of a predetermined period of time, a sensed physical condition, etc.

At block 320, BGU credentials for the BGU(s) included in the attributes are accessed (pulled or pushed) and stored in non- storage memory of the remote device for future use in order to verify any BGU and determine the BGU's permitted usage, such as whether the BGU username and passwords are verified, level of access associated with the BGU username and BGU password, and permitted BGU login count associated with the BGU username and BGU password. The information in various fields of the BGU credentials can be parsed as needed.

At block 325, a waiting period (time period Y) is initiated. Time period Y can be on the time order of seconds, minutes, hours, etc. As is known, in remote devices, bandwidth is typically limited. Accordingly, any attempts to connect to servers must be time or rate limited. In accordance with embodiments of this disclosure, the waiting period is a user configured waiting period (e.g., a time or rate limited waiting period). For example, the waiting period may be configured to be zero for a high-speed bandwidth network, or twenty-four hours for a low-speed bandwidth network. It is understood that other waiting periods are possible, and the waiting period may be static or dynamic. For example, the waiting period may be dynamic (e.g., change over time) in instances in which the bandwidth of the network is subject to variations or changes. After the waiting period, the method may end in some embodiments. In other embodiments, the method may return to block 310 and repeat again.

Returning now to block 310, if it is determined the directory server is not contactable (e.g., due to the remote device being unintentionally disconnected from its network (e.g., network 103 shown in FIG. 1)), the method proceeds to block 330 where a waiting period (time period X) is initiated. Time period X can be on the time order of seconds, minutes, hours, etc. In this example, the waiting period prevents excessive use of network bandwidth (i.e., if the directory server was not contactable, the flow would execute in a constant loop, and each loop would initiate a connection request to the directory server that is uncontactable, preventing any other use of the network). After the waiting period, the method may end in some embodiments. In other embodiments, the method may return to block 310 and repeat again. In some embodiments in which the method ends after block 330 (or after block 325), the method may be initiated again in response to user input, automatically, periodically, and/or a control signal, for example.

It is understood that method 325 may include one or more additional blocks or steps in some embodiments, as will be apparent to one of ordinary skill in the art.

Other example aspects and advantages of the disclosure are described below in connection with method 400.

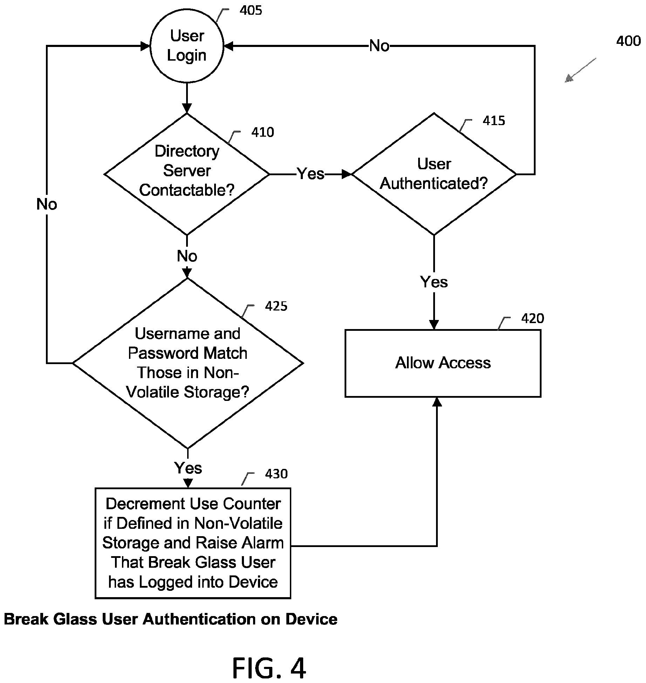

Referring to FIG. 4, a flowchart illustrates an example method 400 for performing break glass user authentication on a remote device that is a BGSU (e.g., remote device 110 shown in FIG. 1). Similar to method 300, method 400 may be implemented, for example, on a BGU module (such as BGU module 122 shown in FIG. 1) of the remote device.

As illustrated in FIG. 4, the method 400 begins at block 405, where a user attempts to log into the remote device by submitting standard (meaning not BGU) user credentials or information. The login attempt may be initiated, for example, on a user interface (such as user interface 124 shown in FIG. 1). The user interface can be, for example and without limitation, a human-machine interface (HMI). The HMI is an input-output device that presents process information to a human operator. In an embodiment, the HMI comprises a personal computer, smartphone, tablet, touchscreen HMI device, or the like.

At block 410, it is determined whether a directory server (such as directory server 104 shown in FIG. 1) is contactable. If it is determined the directory server is contactable, the method proceeds to block 415 where the user is authenticated, for example, based on or using the information provided at block 405.

In one embodiment, a processing system of the remote device implements role-based access control policies to restrict to authorized users access to the remote device's protected information, such as internal diagnostics and/or event history and/or to selected functionality of the remote device. Different standard user credentials can correspond to different levels of access.

If the user is successfully authenticated (i.e., the remote device's processing system confirms with the directory service that the user's credentials are recognized), the method proceeds to block 420 where the user is allowed access to the remote device's protected information or selected functionality, such as internal diagnostics and/or event history. The level of access can depend, for example, upon the directory service settings associated with the username and/or password. Alternatively, if the user is not successfully authenticated (i.e., the remote device's processing system does not recognize the user's credentials), the method returns to block 405.

Returning now to block 410, if it is alternatively determined the directory server is not contactable (e.g., due to the remote device being unintentionally disconnected from its network, such as network 103 shown in FIG. 1), the method proceeds to block 425. The user may realize that the directory server could not be contacted at block 410. Block 425 can include providing notification to the user about the failure at block 410 to contact the directory server. The user would submit a BGU request to a trusted BGU administrator to provide BGU credentials and obtain the BGU credentials. The BGU request for and response with the BGU credentials can be transmitted via an external network. The BGU credentials should be securely transmitted to the user. The user, acting as a BGU, can enter (e.g., via the remote device's user interface) the BGU username and BGU password. At block 425, it is determined if the BGU username and BGU password entered by the user (now acting as a BGU) match the any of the BGU credentials stored in non-volatile storage on the remote device.

If it is determined the BGU username and BGU password submitted by the BGU match those in non-volatile storage on the device, the method proceeds to block 430 where one or more actions may be taken. For example, in one implementation, the one or more actions may include decrementing or incrementing a use counter if the use counter has been defined in the non-volatile storage. This may be suitable, for example, in instances in which the BGU username and BGU password are only permitted to be used a predetermined number of times (one, two, three, etc.).

Additionally, in one example implementation, the one or more actions may include setting one or more alarms and/or incrementing an event counter indicating that a BGU has logged into the remote device. The alarms may be visual, audible or a combination thereof, for example and without limitation. In one or more embodiments, setting one or more alarms, and/or incrementing an event counter, can include sending alarm and/or event signals and/or activating a local alarm setting on the remote device that will cause an alarm signal to be sent to a predetermined device connected to the remote device's network, such as a Scada system (e.g., Scada system 106 shown in FIG. 1), a trusted administrator host system (such as trusted DS administrator host system 108 shown in FIG. 1), directory server 104, or a personal device (e.g., smartphone, personal computer, or the like) of a trusted monitor administrator that supervises or monitors the remote devices.

Since the remote device is not currently coupled to its network, alarm and/or event counter signals will not be sent immediately. Rather, the alarm and/or event counter signals will be sent upon coupling the remote device to its network. Upon receipt of the alarm and/or event counter signals, the trusted BGU administrator or other entrusted personnel will be notified (e.g., via the Scada system) that the BGU credentials need to be changed. As in the alert, the notification can be, for example, visual, audible, or a combination thereof. It is understood that these are but a few of many possible actions that may be taken, as will be apparent to one of ordinary skill in the art. Subsequent to block 430, the method may proceed to block 420 where the BGU is allowed or granted access to the remote device's protected information or selected functionality.

Returning now to block 425, if it alternatively determined the BGU username and BGU password submitted by the BGU do not match those in non-volatile storage on the device, the method may return to block 405 where the user may be presented with a login screen.

Method 400 may be repeated potentially indefinitely in some instances. In other instances, method 400 may conclude, for example, after a predetermined time period or after a predetermined number of failed login attempts.

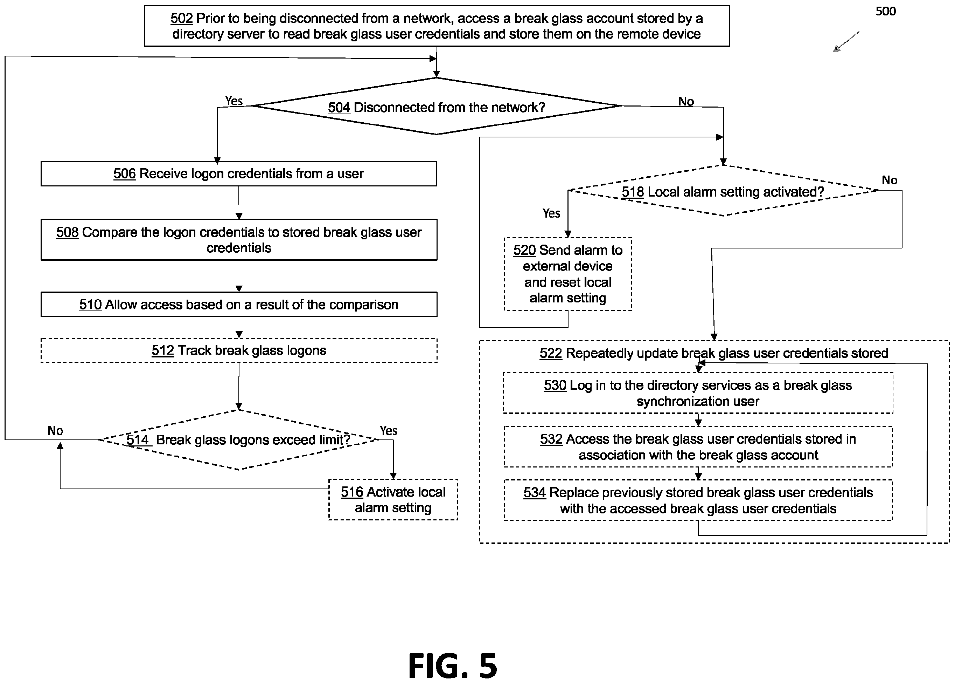

Referring to FIG. 5, a flowchart illustrates an example method 500 for performing break glass user authentication on a remote device (e.g., remote device 110 shown in FIG. 1). Similar to methods 300 and 400, method 500 may be implemented, for example, on a BGU module (such as BGU module 122 shown in FIG. 1) of the remote device.

As illustrated in FIG. 5, the method 500 begins at block 502, where the remote device is configured with initial BGU credentials while it is connected to a directory server via a network (e.g., directory server 104 via network 102 shown in FIG. 1). Block 502 can include accessing a break glass sync account stored by the directory server, reading break glass user credentials stored in association with the break glass sync account, the break glass user credentials including a secure password mechanism (e.g., a password, such as a salted hash password, without limitation to a particular type of password). In one or more embodiments, the break glass user credentials can be stored as textual characters in a text field, such as an attribute field, associated with the break glass sync account.

The remote device retrieves or otherwise obtains the break glass user credentials defined for the remote device from the directory server and stores the break glass user credentials. The break glass user credentials are stored in nonvolatile memory of the remote.

At block 504, a determination is made whether the remote device is disconnected from the network. The method continues at block 506 if it is determined that the remote device is disconnected from the network, whereas the method continues at block 518 if it is determined that the remote device is connected to the network.

At block 506, BGU credentials are received from a user (e.g., a field technician) via the user's attempt to log in to the remote device as a BGU. The user (a BGU) can use a user interface (e.g., a keypad, touchscreen, microphone, etc.) to enter the login credentials. The BGU credentials entered by the user include a secure password mechanism. At block 508, the login credentials are compared to the break glass user credentials stored by the remote device.

At block 510, access to the protected information stored by or functionality provided by the remote device is allowed (e.g., to the user) based on a result of the comparison, based on a level of access permitted for the break glass user. The BGU module can determine the permitted level of access based on settings stored in association with the stored break glass user credentials. For example, if the comparison resulted in a determination that the login credentials match one of the BGU usernames and/or BGU passwords of the break glass user credentials stored by the remote device, this indicated that the user that entered the login credentials obtained the most recent break glass user credentials that were stored by the directory server and entered them as the login credentials. This indicated that the user obtained the most recent break glass user credentials from a trusted BGU administrator that has access to the break glass user credentials stored by the directory server. The trusted BGU administrator can communicate with the user via various communication means, such as via a cellular network to which the user's personal mobile device is coupled, a cloud-based network, etc. Once access is allowed, the user can use the protected information, e.g., for extracting information or diagnosing and/or correcting a problem associated with the remote device, etc. and/or the user can use functionality provided by the remote device.

In one or more embodiments, blocks 512, 514, and 516 are optionally performed, as indicated by the dotted lines. At block 512, the break glass user logins (meaning user logins using break glass user credentials) are tracked by detecting each time the remote device has been logged into using the break glass user credentials. At block 514, a determination is made whether the number of times a break glass user login that occurred exceeded a predetermined limit. In one or more embodiments, the predetermined limit can be established by the stored break glass user credentials and/or settings associated with the stored break glass user credentials, meaning the limit was included with the break glass user credentials and/or was stored by the directory server in association with the stored break glass user credentials (e.g., at block 502 or as updated at blocks 522 (including block 534)).

When the determination at block 514 is that the break glass logins did not exceed the limit, the method continues at block 504. When the determination at block 514 is that the break glass logins did exceed the limit, the method continues at block 516. At block 516, a local alarm setting is activated, after which the method continues at block 504.

In one or more embodiments, blocks 518, 520, and 522 are optionally performed. At block 518 (performed when determined at block 504 that the remote device is connected to the network), a determination is made whether the local alarm setting is activated. In one or more embodiments, the local alarm setting can be activated based upon a number of events counted by the event counter.

The method continues at block 520 when it is determined that the local alarm setting is activated. At block 520, an alarm and/or the event counter is sent to an external device, after which the local alarm setting and/or event counter are reset. The method continues at block 522 when it is determined that the local alarm setting is not activated. At block 522, the break glass user credentials stored by the remote device are repeatedly updated, e.g., with a predetermined wait period between repetitions. This will assure that as long as the remote device is connected to the network, including after the local alarm setting is reset (if needed), the break glass user credentials stored on the remote device are synchronized with the break glass user credentials associated with the remote device's break glass sync account.

An external system and/or trusted BGU administrator is prompted to change the BGU credentials stored with the BGSU account in response to a determination that the remote device had been logged into using the BGU credentials beyond a limit established by the break glass user credentials.

Multiple remote devices (e.g., any of industrial assets 109) can be break glass sync users capable of logging onto the same break glass sync account. In this way, the break glass user credentials stored by all of the remote devices (break glass sync users) using the same break glass sync account will be synchronized with each other and with the glass user credentials associated with the break glass sync account accessed via the directory server.

In one or more embodiments, block 522 optionally includes blocks 530, 532, and 534. At block 530, the remote device logs into the directory services as a break glass synchronization user. In embodiments, this can be performed automatically by the remote device. At block 532, the remote device accesses the break glass user credentials stored in association with the break glass user sync account. At block 534, the remote device replaces break glass user credentials previously stored by the remote device with the accessed break glass user credentials. The method can return to block 530, e.g., following a wait period.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions.

These computer program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart(s) and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational operations to be performed on the computer, other programmable apparatus or other devices to produce a computer implemented process such that the instructions which execute on the computer or other programmable apparatus provide processes for implementing the functions/acts specified in the flowchart and/or block diagram block or blocks.

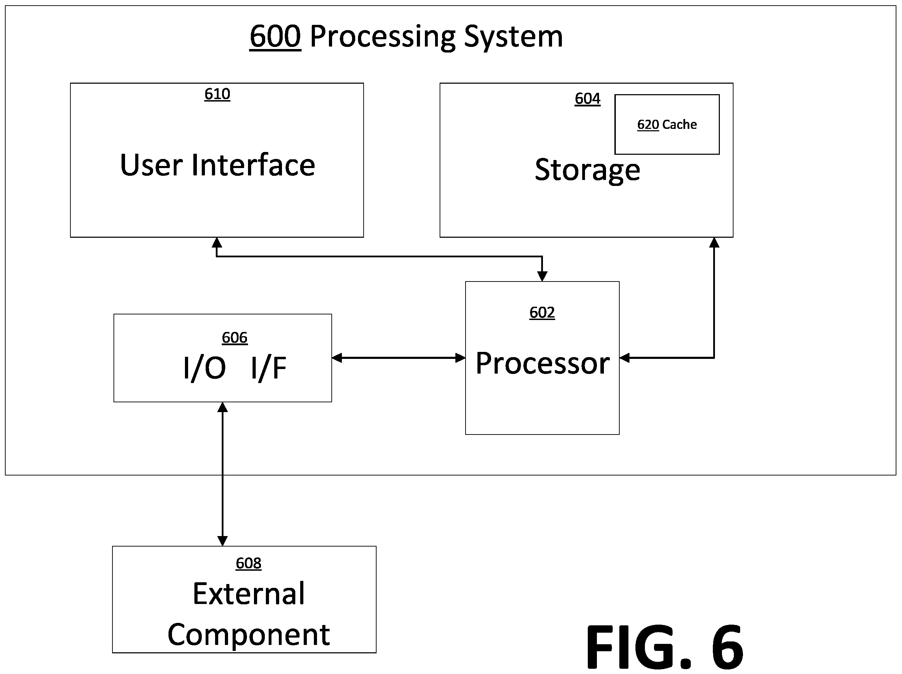

With reference to FIG. 6, a block diagram of an example processing system 600 is shown, which provides an example configuration of one or more computing systems used by computing components of a remote device (such as industrial assets 109 shown in FIG.1). One such processing system 600 is illustrated in FIG. 6. In various embodiments, processing system 600 may be a server, a mainframe computer system, a workstation, a network computer, a desktop computer, a laptop, a handheld computer, or the like, and/or include one or more of a field-programmable gate array (FPGA), application specific integrated circuit (ASIC), microcontroller, microprocessor, or the like. Processing system 600 is only one example of a suitable system and is not intended to suggest any limitation as to the scope of use or functionality of embodiments of the disclosure described herein. Processing system 600 can be implemented using hardware, software, and/or firmware. Regardless, processing system 800 is capable of being implemented and/or performing functionality as set forth in the disclosure.

Additionally, all or portions of the computing components of the remote device could be configured as software, and processing system 600 could represent such portions. Processing system 600 is only one example of a suitable system and is not intended to suggest any limitation as to the scope of use or functionality of embodiments of the disclosure described herein. Processing system 600 can be implemented using hardware, software, and/or firmware. Regardless, processing system 600 is capable of being implemented and/or performing functionality as set forth in the disclosure.

Processing system 600 is shown in the form of a general-purpose computing device. Processing system 600 includes a processor 602, storage 604, an input/output (I/O) interface (I/F) 606 that can communicate with an internal component, such as a user interface 610, and optionally one or more external components 608, such as another processing device of the remote devices, e.g., industrial assets 109 shown in FIG. 1.

The processor 602 can include, for example, a CPU, a programmable logic device (PLD), microprocessor, a discrete signal processor (DSP), a microcontroller, a field programmable gate array (FPGA), an application specific integrated circuit (ASIC), and/or other discrete or integrated logic circuitry having similar processing capabilities. The processor 602 and the storage 604 can be included in components provided in the FPGA, ASIC, microcontroller, or microprocessor, for example.

Storage 604 can include, for example, volatile and non-volatile memory for storing data temporarily and/or long term, and for storing programmable instructions (e.g., BGU module 122 shown in FIG. 1) executable by the processor 602. Storage 604 can include a removable (e.g., portable) memory for storage of program instructions. I/O I/F 606 can include an interface and/or conductors to couple to the one or more internal components, such as user interface 610 and/or external component(s) 608.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flow diagram and/or block diagram block or blocks.

The computer program instructions may also be loaded onto a computer, other programmable data processing apparatus, or other devices to cause a series of operational operations to be performed on the computer, other programmable apparatus or other devices to produce a computer implemented process such that the instructions which execute on the computer or other programmable apparatus provide processes for implementing the functions/acts specified in the block diagram block or blocks.

Embodiments of the processing components of the remote device may be implemented or executed by one or more computer systems, such as a microprocessor. One processing system 600, or multiple instances thereof, can be included within modules of the remote device. In various embodiments, processing system 600 may include one or more of a microprocessor, an FPGA, application specific integrated circuit (ASIC), microcontroller. The processing system 600 can be provided as an embedded device. Portions of the processing system 600 can be provided externally, such by way of a virtual, centralized, and/or cloud-based computer.

Processing system 600 is only one example of a suitable system and is not intended to suggest any limitation as to the scope of use or functionality of embodiments of the disclosure described herein. Regardless, processing system 600 is capable of being implemented and/or performing any of the functionality set forth hereinabove.

Processing system 600 may be described in the general context of computer system-executable instructions, such as program modules, being executed by a computer system. Generally, program modules may include routines, programs, objects, components, logic, data structures, and so on that perform particular tasks or implement particular abstract data types.

In the preceding, reference is made to various embodiments. However, the scope of the present disclosure is not limited to the specific described embodiments. Instead, any combination of the described features and elements, whether related to different embodiments or not, is contemplated to implement and practice contemplated embodiments. Furthermore, although embodiments may achieve advantages over other possible solutions or over the prior art, whether or not a particular advantage is achieved by a given embodiment is not limiting of the scope of the present disclosure. Thus, the preceding aspects, features, embodiments, and advantages are merely illustrative and are not considered elements or limitations of the appended claims except where explicitly recited in a claim(s).

The various embodiments disclosed herein may be implemented as a system, method, or computer program product. Accordingly, aspects may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects may take the form of a computer program product embodied in one or more computer-readable medium(s) having computer-readable program code embodied thereon.

Any combination of one or more computer-readable medium(s) may be utilized. The computer-readable medium may be a non-transitory computer-readable medium. A non-transitory computer-readable medium may be, for example, but not limited to, an electronic, magnetic, optical, electromagnetic, infrared, or semiconductor system, apparatus, or device, or any suitable combination of the foregoing. More specific examples (a non-exhaustive list) of the non-transitory computer-readable medium can include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. Program code embodied on a computer-readable medium may be transmitted using any appropriate medium, including but not limited to wireless, wireline, optical fiber cable, RF, etc., or any suitable combination of the foregoing.

Computer program code for carrying out operations for aspects of the present disclosure can execute using a single computer system or by multiple computer systems communicating with one another (e.g., using a local area network (LAN), wide area network (WAN), the Internet, etc.). While various features in the preceding are described with reference to flowchart illustrations and/or block diagrams, a person of ordinary skill in the art will understand that each block of the flowchart illustrations and/or block diagrams, as well as combinations of blocks in the flowchart illustrations and/or block diagrams, can be implemented by computer logic (e.g., computer program instructions, hardware logic, a combination of the two, etc.). Generally, computer program instructions may be provided to a processor(s) of a general-purpose computer, special-purpose computer, or other programmable data processing apparatus. Moreover, the execution of such computer program instructions using the processor(s) produces a machine that can carry out a function(s) or act(s) specified in the flowchart and/or block diagram block or blocks.

Potential advantages include the ability to provide a break glass user login ability to access protected information stored by or selected functionality used by a remote device when it is disconnected from its network, with the ability to automatically update and synchronize break glass user credentials for the remote devices and/or a group of remote devices after the break glass user credentials were used. Access to internal events and diagnostics is made available even when the directory service is not contactable, improving the ability to determine the root cause of problems.

Other possible features and advantages associated with the disclosure will be appreciated by one of ordinary skill in the art.

It is understood that embodiments of the disclosure herein may be configured as a system, method, or combination thereof. Accordingly, embodiments of the present disclosure may be comprised of various means including hardware, software, firmware, or any combination thereof.

It is to be appreciated that the concepts, systems, circuits, and techniques sought to be protected herein are not limited to use in the example applications described herein (e.g., industrial applications), but rather may be useful in substantially any application where it is desired to distribute, synchronize and reset emergency break glass user credentials. While particular embodiments and applications of the present disclosure have been illustrated and described, it is to be understood that embodiments of the disclosure not limited to the precise construction and compositions disclosed herein and that various modifications, changes, and variations can be apparent from the foregoing descriptions without departing from the spirit and scope of the disclosure as defined in the appended claims.

Having described preferred embodiments, which serve to illustrate various concepts, structures and techniques that are the subject of this patent, it will now become apparent to those of ordinary skill in the art that other embodiments incorporating these concepts, structures and techniques may be used. Additionally, elements of different embodiments described herein may be combined to form other embodiments not specifically set forth above.

Accordingly, it is submitted that that scope of the patent should not be limited to the described embodiments but rather should be limited only by the spirit and scope of the following claims.

## Claims

1. A method to access a disconnected remote device, comprising:
prior to being disconnected from a network, the remote device:
accessing a break glass synchronization (sync) account stored by a directory server;
reading break glass user credentials stored in association with the break glass sync account, the break glass user credentials including a secure password mechanism; and
storing the break glass user credentials defined for the remote device on the remote device; and
after being disconnected from the network, the remote device:
receiving login credentials by a user attempting to log in to the remote device, including a user-entered secure password mechanism;
comparing the login credentials to the break glass user credentials; and
allowing access to the protected information stored by or functionality provided by the remote device based on a result of the comparison.

2. The method of claim 1, wherein the method further comprises,
subsequent to the remote device reconnecting to the network, repeatedly updating the break glass user credentials stored on the remote device, wherein the break glass user credentials were changed responsive to a determination that the remote device had been logged into using the break glass user credentials beyond a limit established by the break glass user credentials.

3. The method of claim 2, wherein updating the break glass user credentials stored on the remote device includes the remote device:
logging into the directory services as a break glass synchronization user;
accessing the break glass user credentials stored in association with the break glass sync account; and
replacing previously stored break glass user credentials with the accessed break glass user credentials.

4. The method of claim 3, wherein the determination that the remote device had been logged onto using the break glass user credentials beyond a limit established by the break glass user credentials is determined locally at the remote device or by a remote monitor or supervisory system.

5. The method of claim 1, wherein:
the remote device is included in a plurality of remote devices, and the method further comprises:
individual remote devices of the plurality of remote devices, when connected to the network, repeatedly:
logging into the directory services as the break glass synchronization user;
accessing the break glass user credentials stored in association with the break glass sync account; and
replacing previously stored break glass user credentials with the accessed break glass user credentials.

6. The method of claim 5, wherein the repeated logging into the directory services is periodic, and the break glass user credentials stored in association with the break glass sync account are changed responsive to a determination that the individual remote device has been logged into using the break glass user credentials beyond a limit established by the break glass user credentials.

7. The method of claim 1, wherein the secure password mechanism is or includes a salted hash password.

8. The method of claim 1, wherein the break glass user credentials include pre-defined items including at least one of level of access and permissible BGU login count, wherein the level of access defines which protected information stored by the remote device or selected functionality of the remote device will be accessible to the BGU once the BGU is logged into the remote device and the permissible BGU login count defines when logins into the remote device are permitted on the basis of count and/or time frame.

9. A remote device comprising:
a memory configured to store a plurality of programmable instructions; and
a processing device in communication with the memory, wherein the processing device, upon execution of the plurality of programmable instructions is configured to:
prior to being disconnected from a network, the remote device:
access a break glass synchronization (sync) account stored by a directory server;
read break glass user credentials stored in association with the break glass sync account, the break glass user credentials including a secure password mechanism; and
store the break glass user credentials defined for the remote device on the remote device; and
after being disconnected from the network, the remote device:
receive login credentials by a user attempting to log in to the remote device, including a user-entered secure password mechanism;
compare the login credentials to the break glass user credentials; and
allow access to the protected information stored by or functionality provided by the remote device based on a result of the comparison.

10. The remote device of claim 9, wherein the processing device, upon execution of the plurality of programmable instructions, is further configured to, subsequent to the remote device reconnecting to the network, repeatedly update the break glass user credentials stored on the remote device, wherein the break glass user credentials were changed responsive to a determination that the remote device had been logged into using the break glass user credentials beyond a limit established by the break glass user credentials.

11. The remote device of claim 10, wherein updating the break glass user credentials stored on the remote device includes the processing device, upon execution of the plurality of programmable instructions, further being configured to:
log into the directory services as a break glass synchronization user;
access the break glass user credentials stored in association with the break glass sync account; and
replace previously stored break glass user credentials with the accessed break glass user credentials.

12. The remote device of claim 11, wherein the determination that the remote device had been logged onto using the break glass user credentials beyond a limit established by the break glass user credentials is determined locally at the remote device or by a remote monitor or supervisory system.

13. The remote device of claim 9, wherein the remote device is included in a plurality of similarly configured remote devices, and wherein the processing device of the similarly configured remote devices, upon execution of the plurality of programmable instructions, is further configured to, when connected to the network, repeatedly:
login into the directory services as the break glass synchronization user;
access the break glass user credentials stored in association with the break glass sync account; and
replace previously stored break glass user credentials with the accessed break glass user credentials.

14. The remote device of claim 13, wherein the repeated logging into the directory services is periodic, and the break glass user credentials stored in association with the break glass sync account are changed responsive to a determination that the individual remote device has been logged into using the break glass user credentials beyond a limit established by the break glass user credentials.

15. The remote device of claim 9, wherein secure password mechanism is or includes a salted hash password.

16. The remote device of claim 9, wherein the break glass user credentials include pre-defined items including at least one of level of access and permissible BGU login count, wherein the level of access defines which protected information stored by the remote device or selected functionality of the remote device will be accessible to the BGU once the BGU is logged into the remote device and the permissible BGU login count defines when logins into the remote device are permitted on the basis of count and/or time frame.

17. A non-transitory computer readable storage medium and one or more computer programs embedded therein, the computer programs comprising instructions, which when executed by a computer system, cause the computer system to:
prior to being disconnected from a network, the remote device:
access a break glass synchronization (sync) account stored by a directory server;
read break glass user credentials stored in association with the break glass sync account, the break glass user credentials including a secure password mechanism; and
store the break glass user credentials defined for the remote device on the remote device; and
after being disconnected from the network, the remote device:
receive login credentials by a user attempting to log in to the remote device, including a user-entered secure password mechanism;
compare the login credentials to the break glass user credentials; and
allow access to the protected information stored by or functionality provided by the remote device based on a result of the comparison.

18. The non-transitory computer readable storage medium of claim 17, wherein the instructions, when executed by a computer system, further cause the computer system to, subsequent to the remote device reconnecting to the network, repeatedly update the break glass user credentials stored on the remote device, wherein the break glass user credentials were changed responsive to a determination that the remote device had been logged into using the break glass user credentials beyond a limit established by the break glass user credentials.

19. The non-transitory computer readable storage medium of claim 18, wherein updating the break glass user credentials stored on the remote device includes the instructions, when executed by a computer system, further causing the computer system to:
log into the directory services as a break glass synchronization user;
access the break glass user credentials stored in association with the break glass sync account; and
replace previously stored break glass user credentials with the accessed break glass user credentials.
